(19) Europäisches Patentamt
European Patent Office
Office européen des brevets

(11) **EP 3 046 162 A1**

(12) **EUROPEAN PATENT APPLICATION**
published in accordance with Art. 153(4) EPC

(43) Date of publication:
**20.07.2016 Bulletin 2016/29**

(51) Int Cl.:
*H01M 2/16* (2006.01)     *H01G 11/52* (2013.01)

(21) Application number: **14842862.6**

(22) Date of filing: **08.09.2014**

(86) International application number:
**PCT/JP2014/073629**

(87) International publication number:
**WO 2015/034080 (12.03.2015 Gazette 2015/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **09.09.2013 JP 2013186646**

(71) Applicant: **UBE Industries, Ltd.
Ube-shi, Yamaguchi 755-8633 (JP)**

(72) Inventors:
• **ABE, Koji
Ube-shi
Yamaguchi 755-8633 (JP)**
• **KONDO, Masahide
Ube-shi
Yamaguchi 755-8633 (JP)**
• **ADACHI, Taiga
Ube-shi
Yamaguchi 755-8633 (JP)**

(74) Representative: **Gille Hrabal
Brucknerstrasse 20
40593 Düsseldorf (DE)**

(54) **SEPARATOR, AND ELECTRICAL STORAGE DEVICE USING SAME**

(57)     Provided are a separator for an energy storage device having an intermediate coating layer between a porous film (I) and a porous film (II), in which the porous film (I) having the intermediate coating layer on one side and the porous film (II) are mechanically stacked and laminated with each other via the intermediate coating layer, and an energy storage device. According to the present invention, it is possible to provide a separator capable of improving discharge characteristics at low temperatures and cycle characteristics at high temperatures and an energy storage device using the same.

Fig. 1

**Description**

TECHNICAL FIELD

The present invention relates to a separator capable of improving discharge characteristics at low temperatures and cycle characteristics at high temperatures and an energy storage device using the same.

BACKGROUND ART

In recent years, an energy storage device, particularly a lithium secondary battery is widely used for a small-sized electronic equipment such as a cellular phone and a laptop computer, an electric vehicle or storage of the electric power. These electronic equipments or vehicle is likely to be used in a broad temperature range of high temperature in the midsummer, low temperature in the arctic weather etc., and thus it is required to improve the electrochemical properties in a broad temperature range with a good balance.

Particularly in order to prevent global warming, it is urgently needed to cut $CO_2$ discharge, and immediate diffusion of a hybrid electric vehicle (HEV), a plug-in hybrid electric vehicle (PHEV), or a battery electric vehicle (BEV) is demanded, among environment-friendly cars loaded with an energy storage device including an energy storage device such as a lithium secondary battery and a capacitor. In particular, an energy storage device for vehicle is required to have high output performance and longer lifespan as a power source of the drive system and expected to be further improvement in performance.

Incidentally, in the present description, the term of the lithium secondary battery is used as a concept also including a so-called lithium ion secondary battery.

Lithium secondary batteries are mainly constituted by a positive electrode and a negative electrode containing a material which can absorb and release lithium, a separator disposed between the positive electrode and the negative electrode, and a non-aqueous electrolytic solution composed of a lithium salt and a non-aqueous solvent.

As the separator, a porous film composed of a polyolefin resin such as polypropylene (PP) and polyethylene (PE) is used from the viewpoint of durability with respect to the non-aqueous solvent or safety.

Various improvements in porous films composed of these polyolefin resins are under investigation in order to cope with the high capacity and high output of the storage battery in association with recent technological improvement.

In Patent Document 1, a non-aqueous electrolyte secondary battery obtained by using a separator which is obtained by bonding two layers having different air permeability is proposed, and it is described that the cycle characteristics are improved.

In Patent Document 2, a non-aqueous secondary battery having two pieces of separators of a microporous membrane separator composed of a thermoplastic resin having a porous layer which contains an inorganic filler as a main component and a nonwoven fabric separator is proposed, and it is described that load characteristics are improved.

In Patent Document 3, a separator having a three-layer structure in which a porous layer having a polyolefin as a constituent is disposed on both sides of a particle layer containing inorganic particles and a thermoplastic resin is proposed, and it is indicated that the heat resistance is improved.

In addition, in Patent Document 4, a lithium ion secondary battery obtained by using a separator having composite oxide particles disposed between a first porous layer composed of polyethylene and a second porous layer composed of polyethylene is proposed, and it is indicated that shutdown characteristics are improved.

PRIOR ART DOCUMENTS

PATENT DOCUMENTS

Patent Document 1: Japanese Patent Publication No. 2008-123861 A
Patent Document 2: Japanese Patent Publication No. 2012-14884 A
Patent Document 3: Japanese Patent Publication No. 2012-22911 A
Patent Document 4: Japanese Patent Publication No. 2013-145693 A

SUMMARY OF THE INVENTION

PROBLEM TO BE SOLVED BY THE INVENTION

An object of the present invention is to provide a separator capable of improving discharge characteristics at low temperatures and cycle characteristics at high temperatures and an energy storage device using the same.

MEANS FOR SOLVING PROBLEM

The present inventors have investigated on the performance of the non-aqueous electrolytic solutions of the prior art in detail and, as a result, have found that there is room for improvement in the non-aqueous electrolyte secondary batteries of Patent Documents 1 to 4 in that the discharge characteristics at low temperatures and cycle characteristics at high temperatures are not still sufficiently improved at the same time.

Hence, the present inventors have carried out extensive studies to achieve the above object and, as a result, have found out that it is possible to improve the discharge characteristics at low temperatures and cycle characteristics at high temperatures of an energy storage device at the same time by using a separator having an intermediate coating layer between a porous film (I) and a porous film (II), in which the porous film (I) having the intermediate coating layer on one side and the porous film (II) are mechanically stacked and laminated with each other via the intermediate coating layer, thereby completing the present invention.

That is, the present invention provides (1) to (1) to be described below.

   (1) A separator for an energy storage device having an intermediate coating layer between a porous film (I) and a porous film (II), in which the porous film (I) having the intermediate coating layer on one side and the porous film (II) are mechanically stacked and laminated with each other via the intermediate coating layer.
   (2) An energy storage device comprising the separator described in (1) above.

EFFECTS OF THE INVENTION

According to the present invention, it is possible to provide a separator capable of improving discharge characteristics at low temperatures and cycle characteristics at high temperatures at the same time, and an energy storage device such as a lithium battery, using the same.

BRIEF DESCRIPTION OF DRAWINGS

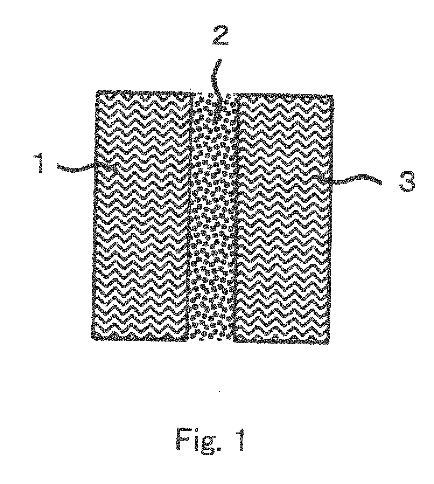

Fig. 1 is a cross-sectional schematic diagram of a separator of the present invention.

EXPLANATIONS OF LETTERS OR NUMERALS

   1: Porous film (I)
   2: Intermediate coating layer
   3: Porous film (II)

DESCRIPTION OF EMBODIMENTS

The present invention relates to a separator and an energy storage device using the same.

[Separator]

The separator of the present invention is a separator having an intermediate coating layer between a porous film (I) and a porous film (II), in which the porous film (I) having the intermediate coating layer on one side and the porous film (II) are mechanically stacked and laminated with each other via the intermediate coating layer.

The reason for that the separator of the present invention can improve the discharge characteristics at low temperatures and the cycle characteristics at high temperatures at the same time is not necessarily clear, but it is considered as follows.

Hitherto, a non-aqueous solvent (organic solvent) hardly penetrates into a polyolefin porous film and the polyolefin porous film does not have a sufficient effect to retain the electrolytic solution in the separator.

In contrast, in the separator of the present invention, the porous film (I) having an intermediate coating layer on one side and the porous film (II) are mechanically stacked and laminated with each other via the intermediate coating layer. The intermediate coating layer can be formed, for example, from one that is composed of inorganic particles and/or organic particles and a binder, and usually can be formed as one that has a high porosity. Hence, an electrolytic solution spreads all over the separator through the intermediate coating layer when the electrolytic solution is injected, and thus the electrolytic solution is likely to penetrate into a polyolefin porous film. Furthermore, the intermediate coating layer can be formed as one that has a high porosity, and thus the retention of the electrolytic solution is improved by the penetration of the electrolytic solution into the void.

For this reason, a sufficient amount of electrolytic solution is retained in the entire separator, thus the electric resistance inside the separator decreases and the discharge characteristics at low temperatures are remarkably improved. Furthermore, by disposing the intermediate coating layer in the separator, it is considered that the retention of electrolytic solution is further improved and a decrease in capacity retention ratio in the cycle characteristics at high temperatures can be remarkably lowered.

As illustrated in Fig. 1, the separator of the present invention is a separator having an intermediate coating layer between the porous film (I) and the porous film (II), in which the porous film (I) has the intermediate coating layer on one side is mechanically stacked and laminated on the porous film (II) via the intermediate coating layer. Incidentally, the porous film (II) may also have an intermediate coating layer on one side.

The porous films (I) and (II) are preferably a highly oxidation-resistant resin from the viewpoint of suppressing the influence due to oxidative degradation of the separator, and among them, the porous films (I) and (II) are preferably a resin selected from a polyolefin resin, a polyester resin, a polyamide resin, a polyimide resin, a polyamide-imide resin, and a fluorine-containing resin, and they are more preferably a resin selected from a polyolefin resin, a polyamide resin, and a fluorine-containing resin. As the polyolefin resin, polyethylene (PE), polypropylene (PP), or an ethylene-propylene copolymer is preferable, and polyethylene (PE) or polypropylene (PP) is more preferable. As the polyamide resin, a para-type or meta-type wholly aromatic polyamide is preferable from the viewpoint of durability, specifically, the para-type is more preferably copolyparaphenylene-3,4'-oxydiphenylene-terephthalamide from the viewpoint of versatility and mechanical properties, and the meta-type is more preferably poly-meta-phenylene isophthalamide from the viewpoint of excellent oxidation and reduction resistance. As the fluorine-containing resin, polytetrafluoroethylene (PTFE) and polyvinylidene fluoride (PVDF) are preferable, and polytetrafluoroethylene (PTFE) is more preferable from the viewpoint of opening properties. In particular, it is preferable that the porous film facing the positive electrode is polypropylene (PP) since the withstand voltage increases. In addition, it is preferable that the porous film facing the negative electrode is polyethylene (PE) since the retention of the electrolytic solution is improved.

The porous films (I) and (II) maybe either of a single-layer film or a multi-layer film, but they are preferably a single-layer film. As the method for fabricating a multi-layer film, for example, a method in which a film is bonded to another film by applying heat, a method in which films are bonded together at the time of fabricating films by a coextrusion method, etc. may be mentioned.

As the method for fabricating the porous films (I) and (II), a dry method or a wet method may be mentioned. In both fabrication methods, it is preferable that the porous film is stretched at least in one direction, and preferably uniaxial stretched or biaxial stretched.

Specifically, the dry method is a fabrication method in which one obtained by melting a polyolefin resin, extruding it into a film shape, and subjecting it to annealing is stretched at low temperature to form pores in the state of initial stage and then stretched at high temperature to form micropores. In addition, the wet method is a fabrication method in which one obtained by mixing a polyolefin resin with a hydrocarbon solvent or another low molecular weight material and heating the mixture to melt is processed into a sheet, the sheet is then stretched in a machine direction or a biaxial direction, and finally the previous solvent or material is extracted with a volatile solvent to form micropores.

As the porous film (I), one that is fabricated through uniaxial stretching using the dry method is preferable from the viewpoint of suppressing deformation of the separator at high temperatures, and an effect to further suppress layer deformation is improved by disposing an intermediate coating layer on at least one side. In addition, as the porous film (II), one that is fabricated through biaxial stretching using the wet method is preferable from the viewpoint of improving the mechanical strength of the separator.

Among them, it is preferable that the porous film on the side facing the positive electrode is the porous film (I) composed of polypropylene (PP) fabricated by the dry method and the porous film on the side facing the negative electrode is the porous film (II) composed of polyethylene (PE) fabricated by the wet method since the discharge characteristics at low temperatures and the cycle characteristics at high temperatures are further improved.

The thickness of the porous films (I) and (II) is preferably 2 μm or more, more preferably 3 μm or more, and furthermore preferably 4 μm or more. The upper limit thereof is 30 μm or less, preferably 20 μm or less, and more preferably 15 μm or less. It is preferable that the thickness of the porous films (I) and (II) is in the above range since it is possible to further improve the discharge characteristics at low temperatures and the cycle characteristics at high temperatures. In addition, it is preferable that the thickness ratio of the porous film (I) to the porous film (II) is (I) : (II) = 80 : 20 to 20 : 80 since the cycle characteristics at high temperatures are further improved, and the thickness ratio is more preferably from 70 : 30 to 30 : 70.

The maximum pore size of the porous films (I) and (II) is preferably 0.01 μm or more, more preferably 0.03 μm or more, and furthermore preferably 0.05 μm or more. The upper limit thereof is 20 μm or less, preferably 15 μm or less, and more preferably 10 μm or less. It is preferable that the maximum pore size of the porous films (I) and (II) are in the above range since it is possible to further improve the discharge characteristics at low temperatures and the cycle characteristics at high temperatures.

In particular, between the porous films (I) and (II), it is preferable that the maximum pore size of the porous film on the side facing the negative electrode is 0.5 $\mu$m or more since the discharge characteristics at low temperatures are further improved, and the maximum pore size is more preferably 1 $\mu$m or more.

The porosity of the porous films (I) and (II) is preferably 30% or more, more preferably 35% or more, and furthermore preferably 40% or more. The upper limit thereof is 90% or less, preferably 85% or less, and more preferably 80% or less. It is preferable that the porosity of the porous films (I) and (II) is in the above range since it is possible to further improve the discharge characteristics at low temperatures and the cycle characteristics at high temperatures.

In particular, between the porous films (I) and (II), it is preferable that the porosity of the porous film on the side facing the negative electrode is 40% or more since the discharge characteristics at low temperatures are further improved, and the porosity is more preferably 45% or more.

The air permeability (Gurley value) of the porous films (I) and (II) is preferably in a range of 10 sec/100 cc to 600 sec/100 cc. It is less concerned that the output characteristics decrease when the air permeability is 600 sec/100 cc or less, and it is possible to suppress deterioration in safety due to micro short circuit when the air permeability is 10 sec/100 cc or more. The air permeability is preferably 20 sec/100 cc or more and more preferably 30 sec/100 cc or more. The upper limit thereof is preferably 500 sec/100 cc or less and more preferably 400 sec/100 cc or less.

Among them, it is preferable that the air permeability of the porous film (I) is in a range of 70 sec/100 cc to 600 sec/100 cc since the cycle characteristics at high temperatures are improved, and the air permeability is more preferably 80 sec/100 cc to 600 sec/100 cc and furthermore preferably 90 sec/100 cc to 600 sec/100 cc. In addition, it is preferable that the air permeability of the porous film (II) is in a range of 10 sec/100 cc to 300 sec/100 cc since the load characteristics at low temperatures are improved, and the air permeability is more preferably 10 sec/100 cc to 200 sec/100 cc and furthermore preferably 10 sec/100 cc to 100 sec/100 cc.

The intermediate coating layer may be a layer formed on the porous film (I) by coating, and it is not particularly limited, but it is preferably a layer having inorganic particles and/or organic particles and a binder. The intermediate coating layer is formed, for example, by preparing a slurry in which inorganic particles and/or organic particles and a binder are dispersed and dissolved in an organic solvent such as N-methyl-2-pyrrolidone (NMP) and coating it on one side of the porous film (I), for example, using known coating equipment such as a gravure coater, a knife coater, a reverse roll coater, or a die coater.

The content of the binder in the intermediate coating layer is preferably 1% by mass or more and more preferably 2% by mass or more. The upper limit thereof is preferably 25% by mass or less and more preferably 20% by mass or less. It is preferable that the content of the binder is in the above range since it is possible to improve the strength of the intermediate coating layer.

The thickness of the intermediate coating layer is preferably 0.5 $\mu$m or more, more preferably 1 $\mu$m or more, and furthermore preferably 1.5 $\mu$m or more. The upper limit thereof is 7 $\mu$m or less, preferably 6 $\mu$m or less, and more preferably 5 $\mu$m or less. It is preferable that the thickness of the intermediate coating layer is in the above range since it is possible to further improve the discharge characteristics at low temperatures and the cycle characteristics at high temperatures.

The porosity of the intermediate coating layer is preferably in a range of 30 to 80%. It is preferable that the porosity is 30% or more since the retention of the electrolytic solution is improved, and it is preferable that the porosity is 80% or less since the strength of the separator increases. The lower limit thereof is more preferably 35% or more and furthermore preferably 40% or more. In addition, the upper limit thereof is more preferably 75% or less and furthermore preferably 70% or less.

As the inorganic particles contained in the intermediate coating layer, an oxide or a hydroxide which contains one or more kinds of elements selected from Al, Si, Ti, and Zr may be suitably mentioned.

Specific examples of the inorganic particles may suitably include one kind or two or more kinds selected from an oxide such as silica ($SiO_2$), alumina ($Al_2O_3$), titania ($TiO_2$), zirconia ($ZrO_2$), and $BaTiO_3$, and a hydroxide such as boehmite ($Al_2O_3 \cdot 3H_2O$).

Among them, one kind or two or more kinds selected from silica ($SiO_2$), alumina ($Al_2O_3$), zirconia ($ZrO_2$), $BaTiO_3$, and boehmite ($Al_2O_3 \cdot 3H_2O$) are preferable, silica ($SiO_2$), alumina ($Al_2O_3$), $BaTiO_3$, or boehmite ($Al_2O_3 \cdot 3H_2O$) is more preferable, and alumina ($Al_2O_3$), $BaTiO_3$, or boehmite ($Al_2O_3 \cdot 3H_2O$) is particularly preferable.

Specific examples of the organic particles contained in the intermediate coating layer may suitably include one kind or two or more kinds selected from polymeric particles such as polyamide, aramid, polyimide, polymethyl methacrylate, polystyrene, and polyethylene terephthalate.

Among them, one kind or two or more kinds selected from polyamide, aramid, and polyimide are preferable and polyamide or aramid is more preferable.

Specific examples of the binder contained in the intermediate coating layer may suitably include one kind or two or more kinds selected from an ethylene-acrylic acid copolymer such as an ethylene-vinyl acetate copolymer (EVA) and an ethylene-ethyl acrylate copolymer, polytetrafluoroethylene (PTFE), polyvinylidene fluoride (PVDF), fluorine-based rubber, a copolymer of styrene and butadiene (SBR) such as styrene-butadiene rubber, carboxymethyl cellulose (CMC), hydroxyethyl cellulose (HEC), polyvinyl alcohol (PVA), polyvinyl butyral (PVB), polyvinyl pyrrolidone (PVP), poly(N-vinylacetamide), a crosslinked acrylic resin, polyurethanes, and an epoxy resin.

Among them, one kind or two or more kinds selected from an ethylene-acrylic acid copolymer such as an ethylene-ethyl acrylate copolymer, polyvinyl pyrrolidone (PVP), poly(N-vinylacetamide), polyvinylidene fluoride (PVDF), a copolymer of styrene and butadiene (SBR), and carboxymethyl cellulose (CMC) are preferable.

In addition, in the case of forming an intermediate coating layer on one side of the porous film (II) as well, it may be formed according to the embodiment described above in the same manner as in the case of forming an intermediate coating layer on the porous film (I). In this case, the intermediate coating layer formed on the porous film (I) and the intermediate coating layer formed on the porous film (II) may be identical to each other or may be different from each other in thickness, constitutional materials, etc.

The porous films (I) and/or (II) may have a resin layer on the side of the porous film (I) and/or (II), which is opposite to the side contacting with the intermediate coating layer. As the resin layer, one kind or two or more kinds selected from organic substances such as polytetrafluoroethylene (PTFE), polyvinylidene fluoride (PVDF), a copolymer of styrene and butadiene (SBR), a copolymer of acrylonitrile and butadiene (NBR), carboxymethyl cellulose (CMC), and ethylene-propylene-diene terpolymer may be suitably mentioned.

In particular, one kind or two or more kinds selected from polyvinylidene fluoride (PVDF), a copolymer of styrene and butadiene (SBR), and carboxymethyl cellulose (CMC) are preferable.

The thickness of the resin layer is preferably 0.1 $\mu$m or more, more preferably 0.3 $\mu$m or more, and furthermore preferably 0.5 $\mu$m or more. The upper limit thereof is 5 $\mu$m or less, preferably 4 $\mu$m or less, and more preferably 3 $\mu$m or less. It is preferable that the thickness of the resin layer is in the above range since it is possible to further improve the cycle characteristics at high temperatures.

The separator of the present invention is one that is obtained by mechanically stacking and laminating the porous film (II), via the intermediate coating layer, on the porous film (I) having an intermediate coating layer on one side, and thus there is usually an interface between the intermediate coating layer and the porous film (II). In other words, the intermediate coating layer and the porous film (II) are not physically or chemically combined to each other so that these are in a state of not being integrated. On the other hand, the porous film (I) and the intermediate coating layer do not substantially have an interface therebetween and are physically combined to be integrated since the intermediate coating layer is one that is formed on the porous film (I) by a coating method.

Moreover, according to the separator of the present invention, the porous film (I) and the intermediate coating layer are physically integrated and an interface is formed between the intermediate coating layer and the porous film (II), and thus it is considered that it is possible to improve the penetration of the electrolytic solution due to the presence of such an interface and the penetrated electrolytic solution can be favorably retained due to that the porous film (I) and the intermediate coating layer are physically integrated. Moreover, it is considered that this makes it possible to improve the discharge characteristics at low temperatures and the cycle characteristics at high temperatures at the same time.

Incidentally, in the case of forming an intermediate coating layer on one side of the porous film (II) as well, it is the same as in the case of forming an intermediate coating layer only on the porous film (I) except that such an interface is formed between the intermediate coating layer formed on the porous film (I) and the intermediate coating layer formed on the porous film (II).

[Non-aqueous solvent]

As the non-aqueous solvent used in the non-aqueous electrolytic solution of the present invention, one kind or two or more kinds selected from a cyclic carbonate, a chain ester, a lactone, an ether, and an amide may be mentioned. From the viewpoint of synergistically improving the electrochemical properties in a broad temperature range, chain ester is preferably contained, chain carbonate is more preferably contained, and both of cyclic carbonate and chain carbonate are furthermore preferably contained.

Incidentally, the term "chain ester" is used as a concept including a chain carbonate and a chain carboxylic acid ester.

As the cyclic carbonate, one kind or two or more kinds selected from ethylene carbonate (EC), propylene carbonate (PC), 1,2-butylene carbonate, 2,3-butylene carbonate, 4-fluoro-1,3-dioxolan-2-one (FEC), trans or cis-4,5-difluoro-1,3-dioxolan-2-one (hereinafter, both are collectively referred to as "DFEC"), vinylene carbonate (VC), vinyl ethylene carbonate (VEC), and 4-ethynyl-1,3-dioxolan-2-one (EEC) may be mentioned, and one kind or two or more kinds selected from ethylene carbonate, propylene carbonate, 4-fluoro-1,3-dioxolan-2-one, vinylene carbonate, and 4-ethynyl-1,3-dioxolan-2-one (EEC) are more suitable.

In addition, it is preferable to use a cyclic carbonate having a carbon-carbon multiple bond such as vinylene carbonate (VC) described above since the cycle characteristics are further improved. As the cyclic carbonate having a carbon-carbon multiple bond, VC, VEC, or EEC is preferable and VC is more preferable.

The content of the cyclic carbonate having a carbon-carbon multiple bond is preferably 0.07% by volume or more, more preferably 0.2% by volume or more, and furthermore preferably 0.7% by volume or more with respect to the total volume of non-aqueous solvent. The upper limit thereof is preferably 7% by volume or less, more preferably 4% by volume or less, and furthermore preferably 2.5% by volume or less. It is preferable that the content of the cyclic carbonate having a carbon-carbon multiple bond is in the above range since it is possible to further improve the cycle characteristics.

As the chain ester, one kind or two or more kinds of asymmetric chain carbonates selected from methyl ethyl carbonate (MEC), methyl propyl carbonate (MPC), methyl isopropyl carbonate (MIPC), methyl butyl carbonate, and ethyl propyl carbonate, one kind or two or more kinds of symmetric chain carbonates selected from dimethyl carbonate (DMC), diethyl carbonate (DEC), dipropyl carbonate, and dibutyl carbonate, and one kind or two or more kinds of chain carboxylic acid esters selected from a pivalic acid ester such as methyl pivalate, ethyl pivalate, and propyl pivalate, methyl propionate, ethyl propionate, methyl acetate, and ethyl acetate may be suitably mentioned.

Among the chain esters, a chain ester having a methyl group selected from dimethyl carbonate, methyl ethyl carbonate, methyl propyl carbonate, methyl isopropyl carbonate, methyl butyl carbonate, methyl propionate, methyl acetate, or ethyl acetate is preferable. In particular, a chain carbonate having a methyl group is preferable.

In addition, in the case of using a chain carbonate, it is preferable to use two or more kinds. Furthermore, it is more preferable to contain both a symmetric chain carbonate and an asymmetric chain carbonate, and it is furthermore preferable that the content of the symmetric chain carbonate is more than that of the asymmetric chain carbonate.

The content of the chain ester is not particularly limited, but it is preferably used in a range of 60 to 90% by volume with respect to the total volume of non-aqueous solvent. The viscosity of the non-aqueous electrolytic solution is not excessively high when the content is 60% by volume or more. It is less concerned that the electric conductivity of the non-aqueous electrolytic solution decreases so as to decrease the electrochemical characteristics in a broad temperature range when the content is 90% by volume or less. Hence it is preferable that the content is in the above range.

The ratio of the volume occupied by the symmetric chain carbonate in the chain carbonate is preferably 51% by volume or more and more preferably 55% by volume or more. The upper limit thereof is more preferably 95% by volume or less and furthermore preferably 85% by volume or less. It is particularly preferable that dimethyl carbonate is contained in the symmetric chain carbonate. In addition, it is more preferable that the asymmetric chain carbonate has a methyl group, and methyl ethyl carbonate is particularly preferable.

The case described above is preferable since the electrochemical characteristics in a broad temperature range are further improved.

The ratio of the cyclic carbonate to the chain ester is preferably cyclic carbonate : chain ester (volume ratio) = 10 : 90 to 45 : 55, more preferably 15 : 85 to 40 : 60, and particularly preferably 20 : 80 to 35 : 65 from the viewpoint of improvement in electrochemical characteristics in a broad temperature range.

The non-aqueous solvents described above are usually used as a mixture in order to achieve an appropriate physical property. As the combination, for example, a combination of a cyclic carbonate and a chain carbonate, a combination of a cyclic carbonate and a chain carboxylic acid ester, a combination of a cyclic carbonate and a lactone, a combination of a cyclic carbonate, a chain carbonate, and a lactone, or a combination of a cyclic carbonate, a chain carbonate, and a chain carboxylic acid ester, etc. may be suitably mentioned.

[Electrolyte salt]

As the lithium salt, an inorganic lithium salt such as $LiPF_6$, $LiPO_2F_2$, $Li_2PO_3F$, $LiBF_4$, or $LiClO_4$, a lithium imide salt such as $LiN(SO_2CF_3)_2$ and $LiN(SO_2C_2F_5)_2$, a lithium salt having a cyclic fluorinated alkylene chain such as $(CF_2)_2(SO_2)_2NLi$ and $(CF_2)_3(S_2)_2NLi$, a lithium salt having a $SO_3$ group or a $SO_4$ group such as $LiFSO_3$ and $LiSO_4C_2H_5$, or a lithium salt having an oxalate complex as an anion such as lithium bis[oxalate-O,O']borate may be suitably mentioned. It is possible to use one kind or two or more kinds of these as a mixture.

Among these, one kind or two or more kinds selected from $LiPF_6$, $LiPO_2F_2$, $Li_2PO_3F$, $LiBF_4$, $LiN(SO_2CF_3)_2$, $LiN(SO_2C_2F_5)_2$, $LiFSO_3$, and $LiSO_4C_2H_5$ are preferable, one kind or two or more kinds selected from $LiPF_6$, $LiBF_4$, $LiPO_2F_2$, $LiFSO_3$, and $LiSO_4C_2H_5$ are more preferable, and it is furthermore preferable to use $LiPF_6$. The concentration of the lithium salt is usually preferably 0.3 M or more, more preferably 0.7 M or more, and furthermore preferably 1.1 M or more with respect to the non-aqueous solvent. In addition, the upper limit thereof is preferably 2.5 M or less, more preferably 2.0 M or less, and furthermore preferably 1.6 M or less.

In addition, as a suitable combination of these lithium salts, it is preferable to contain $LiPF_6$ and to further contain one kind or two or more kinds selected from $LiPO_2F_2$, $LiFSO_3$, and $LiSO_4C_2H_5$. The ratio of the lithium salt other than $LiPF_6$ occupying in the non-aqueous solvent is preferably 0.001 M or more since the effect to improve the cycle characteristics at high temperatures is likely to exert, and it is preferably 0.005 M or less since it is less concerned that the effect to improve the cycle characteristics at high temperatures decreases. The ratio is preferably 0.01 M or more, more preferably 0.03 M or more, and particularly preferably 0.04 M or more. The upper limit thereof is preferably 0.4 M or less and particularly preferably 0.2 M or less.

The separator of the present invention can be used in the first to fourth energy storage devices to be described below. As the non-aqueous electrolyte, not only liquid ones but also gelled ones can be used. Among them, it is preferable to use the separator for the first energy storage device using a lithium salt as the electrolyte salt (namely, for a lithium battery) or a fourth energy storage device (namely, for a lithium ion capacitor). It is more preferable to use the separator for a lithium battery, and it is furthermore preferable to use the separator for a lithium secondary battery.

[First energy storage device (lithium battery)]

In the present description, the lithium battery is a general term for a lithium primary battery and a lithium secondary battery. Further, in the present description, the term of the lithium secondary battery is used as a concept also including the so-called lithium ion secondary battery. The lithium battery of the present invention comprises a positive electrode, a negative electrode, a nonaqueous electrolytic solution in which an electrolyte salt is dissolved in a nonaqueous solvent, and a separator. The constituent members other than the separator such as the positive electrode, the negative electrode and the nonaqueous electrolytic solution may be used without particular limitation.

For example, as the positive electrode active material for a lithium secondary battery, a complex metal oxide with lithium, which contains one or more kinds selected from cobalt, manganese and nickel, is used. These positive electrode active materials may be used alone in one kind or in combination of two or more kinds.

As the lithium complex metal oxide, for example, one kind or two or more kinds selected from $LiCoO_2$, $LiMn_2O_4$, $LiNiO_2$, $LiCo_{1-x}Ni_xO_2$ (0.01 < x < 1), $LiCo_{1/3}Ni_{1/3}Mn_{1/3}O_2$, $LiNi_{1/2}Mn_{3/2}O_4$, and $LiCo_{0.98}Mg_{0.02}O_2$ may be mentioned. Further, it may be used in combination such as $LiCoO_2$ and $LiMn_2O_4$, $LiCoO_2$ and $LiNiO_2$, $LiMn_2O_4$ and $LiNiO_2$.

In addition, a portion of the lithium complex metal oxide may be substituted with another element in order to improve the safety at the time of the overcharge, or the cycle property, and allow the usage at 4.3 V or more of the charge potential. For example, a portion of cobalt, manganese or nickel may be substituted with at least one or more kinds of elements such as Sn, Mg, Fe, Ti, Al, Zr, Cr, V, Ga, Zn, Cu, Bi, Mo and La, or a portion of O may be substituted with S or F, or the lithium complex metal oxide may be coated with a compound that contains these other elements.

Among these, a lithium complex metal oxide that allows the usage at 4.3 V or more of the charge potential of the positive electrode based on Li in the full-charge state, such as $LiCoO_2$, $LiMn_2O_4$ and $LiNiO_2$, is preferable, a lithium complex metal oxide that allows the usage at 4.4 V or more based on Li such as a solid solution with $LiCo_{1-x}M_xO_2$ (wherein, M is at least one or more kinds of elements selected from Sn, Mg, Fe, Ti, Al, Zr, Cr, V, Ga, Zn and Cu, $0.001 \leq x \leq 0.05$), $LiCo_{1/3}Ni_{1/3}Mn_{1/3}O_2$, $LiNi_{1/2}Mn_{3/2}O_4$, and $Li_2MnO_3$ and $LiMO_2$ (M is a transitional metal such as Co, Ni, Mn and Fe) is more preferable.

Furthermore, as the positive electrode active material, lithium-containing olivine-type phosphoric acid salt may be also used. Particularly, lithium-containing olivine-type phosphoric acid salt containing one kind or two or more kinds selected from iron, cobalt, nickel and manganese is preferable. As specific examples thereof, one kind or two or more kinds selected from $LiFePO_4$, $LiCoPO_4$, $LiNiPO_4$, and $LiMnPO_4$ may be mentioned. A portion of these lithium-containing olivine-type phosphoric acid salts may be substituted with another element. A portion of iron, cobalt, nickel or manganese may be substituted with one kind or more kinds of elements selected from Co, Mn, Ni, Mg, Al, B, Ti, V, Nb, Cu, Zn, Mo, Ca, Sr, W and Zr, or the lithium-containing olivine-type phosphoric acid salt may be coated with a compound containing these other elements or a carbon material. Among these, $LiFePO_4$ or $LiMnPO_4$ is preferable. Further, the lithium-containing olivine-type phosphoric acid salt may be used in a mixture with, for example, the above positive electrode active material.

The conductive material of the positive electrode is not particularly limited as long as an electron conduction material that does not cause chemical change. For example, graphites such as natural graphite (flattened graphite etc.) and artificial graphite, one kind or two or more kinds of carbon black such as acethylene black, Ketjen black, channel black, furnace black, lamp black and thermal black may be mentioned. In addition, the graphite and the carbon black may be suitably mixed and used. The addition amount of the conductive material to the positive electrode mixture is preferably 1 to 10 mass%, and particularly preferably 2 to 5 mass%.

The positive electrode can be manufactured by mixing the above-mentioned positive electrode active material with the conductive material such as acethylene black and carbon black, and a binder such as polytetrafluoroethylene (PTFE), polyvinylidene fluoride (PVDF), a copolymer of styrene and butadiene (SBR), a copolymer of acrylonitrile and butadiene (NBR), carboxymethyl cellulose (CMC), and ethylene-propylene-diene terpolymer, and adding a high boiling-point solvent such as 1-methyl-2-pyrrolidone to this, and kneading them to prepare the positive electrode mixture, and then applying this positive electrode mixture to a current collector such as aluminum foil and lath plate made of stainless-steel, drying, pressure molding, and then subjecting the resultant to heat treatment at a temperature of 50°C to 250°C or so for 2 hours or so under vacuum.

The density of parts excluding the current collector of the positive electrode is ordinarily 1.5 $g/cm^3$ or more,

preferably 2 g/cm$^3$ or more, more preferably 3 g/cm$^3$ or more, and further preferably 3.6 g/cm$^3$ or more in order to further enhance the capacity of the battery. Meanwhile, the upper limit is preferably 4 g/cm$^3$ or less.

As the negative electrode active material for a lithium secondary battery, lithium metal or lithium alloy, and a carbon material which can absorb and release lithium [graphitizable carbon, non-graphitizable carbon having 0.37 nm or more of the spacing of the (002) plane, graphite having 0.34 nm or less of the spacing of the (002) plane, etc.], tin (simple substance), a tin compound, silicon (simple substance), a silicon compound, and a lithium titanate compound such as $Li_4Ti_5O_{12}$ etc. may be used alone in one kind or in combination of two or more kinds.

Among these, a high crystalline carbon material such as artificial graphite and natural graphite is preferable, and a carbon material having a graphite-type crystalline structure having 0.340 nm (nanometer) or less, particularly 0.335 to 0.337 nm of the spacing ($d_{002}$) of the lattice plane (002) is particularly preferable from the view of absorption and release ability of the lithium ion.

In particular, artificial graphite particles having a bulky structure in which plural flattened graphite fine particles are put together or combined non-parallel to each other, or graphite particles obtained by exerting repeatedly a mechanical action, such as a compressive force, a friction force, a shearing force, etc. on flaky natural graphite particles to subject them to spheroidizing treatment are preferably used.

A ratio (I (110)/I (004)) of a peak intensity I (110) of a (110) plane and a peak intensity I (004) of a (004) plane in the graphite crystal which are obtained from X ray diffractiometry of the negative electrode sheet subjected to pressure molding so that a density of parts excluding the current collector of the negative electrode is 1.5 g/cm$^3$ or more is controlled to 0.01 or more, whereby the electrochemical characteristics in a further broader temperature range are improved, and therefore it is preferred. The ratio is more preferably 0.05 or more, further preferably 0.1 or more. Further, the negative electrode sheet is treated too much in a certain case and reduced in a crystallinity to reduce a discharge capacity of the battery, and therefore an upper limit of the ratio (I (110)/I (004)) of a peak intensity is preferably 0.5 or less, more preferably 0.3 or less.

As the metal compound which can absorb and release lithium as the negative electrode active material, compounds containing at least one kind of a metal element such as Si, Ge, Sn, Pb, P, Sb, Bi, Al, Ga, In, Ti, Mn, Fe, Co, Ni, Cu, Zn, Ag, Mg, Sr and Ba may be mentioned. These metal compounds may be used in any form such as an element, an alloy, an oxide, a nitride, a sulfide, a boride, an alloy with lithium. However, the metal compound is preferably any one of an element, an alloy, an oxide and an alloy with lithium since it allows the battery to have high capacity. Among these, those containing at least one kind of an element selected from Si, Ge and Sn are preferable, those containing at least one kind of an element selected from Si and Sn are more preferable since it allows the battery to have high capacity.

The negative electrode can be manufactured in a similar manner to the manufacture of the above-mentioned positive electrode by using and kneading the conductive material, the bindert and the high boiling point solvent to prepare a negative electrode mixture, and then applying this negative electrode mixture to a current collector such as copper foil, drying, pressure molding, and then subjecting the resultant to heat treatment at a temperature of 50°C to 250°C or so for 2 hours or so under vacuum.

The density of parts excluding the current collector of the negative electrode is ordinarily 1.1 g/cm$^3$ or more, preferably 1.5 g/cm$^3$ or more, and particularly preferably 1. 7 g/cm$^3$ or more in order to further enhance the battery capacity. Meanwhile, the upper limit is preferably 2 g/cm$^3$ or less.

Further, as the negative electrode active material for the lithium primary battery, lithium metal or lithium alloy may be mentioned.

The structure of the lithium battery is not particularly limited, and a coin-type battery, a cylinder-type battery, an square-shaped battery, or a laminate-type battery may be applied.

The lithium secondary battery of the present invention is excellent in the electrochemical properties in a broad temperature range even when the charge termination voltage is 4.2 V or more, particularly 4.3 V or more, and further the properties are good even when the charge termination voltage is 4.4 V or more. The discharge cut-off voltage is ordinarily 2.8 V or more, and further can be rendered to be 2.5 V or more. However, the discharge cut-off voltage can be rendered to be 2.0 V or more with the lithium secondary battery of the present invention. The current value is not particularly limited, but is ordinarily used in a range of 0.1 to 30C. Further, the lithium battery of the present invention can be charged and discharged at -40 to 100°C, preferably -10 to 80°C.

In the present invention, as a countermeasure for increase of the inner pressure of the lithium battery, a method of establishing a safety valve at the cover of the battery, or a method of making incision on a member such as the battery can or the gasket may be also adopted. Further, as a countermeasure for the safety to prevent the overcharge, current shutoff mechanism that shutoffs the current upon perception of the inner pressure of the battery may be established on the cover of the battery.

[Second energy storage device (electric double layer capacitor)]

The second energy storage device is an energy storage device that stores the energy using the capacity of the electric double layer at the interface of the electrolytic solution and the electrode. One example of the present invention is an electric double layer capacitor. The most typical electrode active material used in this energy storage device is activated carbon. The capacity of the double layer increases generally in proportion to the surface area.

[Third energy storage device]

The third energy storage device is an energy storage device that stores the energy using the doping/de-doping reaction of the electrode. As the electrode active material used in this energy storage device, metal oxides such as ruthenium oxide, iridium oxide, tungsten oxide, molybdenum oxide and copper oxide, and n conjugated polymers such as polyacene and a polythiophene derivative may be mentioned. A capacitor using these electrode active materials allows storage of the energy accompanied with the doping/de-doping reaction of the electrode.

[Fourth energy storage device (lithium ion capacitor)]

The fourth energy storage device is an energy storage device that stores the energy using intercalation of lithium ion into a carbon material such as graphite that is the negative electrode. The energy storage device is called the lithium ion capacitor (LIC). As the positive electrode, for example, those using an electric double layer between the activated carbon electrode and the electrolytic solution, those using the doping/de-doping reaction of n conjugated polymer electrode, etc. may be mentioned In the electrolytic solution, at least lithium salt such as $LiPF_6$ is contained.

EXAMPLES

The cross-sectional schematic diagram on the configuration of the separator used in the present invention is shown in Table 1, but it is not limited thereto. In addition, the cross-sectional schematic diagram of the separator to be Comparative Example is also shown in Table 1.

[Table 1]

**Table 1**

| Separator | Cross-sectional schematic diagram | Stacking method | Configuration |
|---|---|---|---|
| A-1 | | Mechanically stacked and laminated with each other (interface between 2 and 3) | 1: PP (dry); 8 $\mu$m<br>2: plate boehmite (90% by mass) + PVDF (10% by mass); 4 $\mu$m<br>3: PP (dry); 12 $\mu$m |
| A-2 | | Mechanically stacked and laminated with each other (interface between 2 and 3) | 1: PP (dry); 8 $\mu$m<br>2: plate boehmite (90% by mass) + PVDF (10% by mass); 4 $\mu$m<br>3: PP (dry); 12 $\mu$m<br>4: PVDF; 2 $\mu$m |
| B | | Mechanically stacked and laminated with each other (interface between 5 and 6) | 5: PP (dry); 8 $\mu$m<br><br>6: PE (dry); 12 $\mu$m |
| C | | Mechanically stacked and laminated with each other (interface between 8 and 9) | 7: plate boehmite (90% by mass) + PVDF (10% by mass); 4 $\mu$m<br>8: PP (dry); 8 $\mu$m<br>9: PE (nonwoven fabric); 12 $\mu$m |

(continued)

| Separator | Cross-sectional schematic diagram | Stacking method | Configuration |
|---|---|---|---|
| D | | Stacked by coextrusion method | 10: PP(dry); 8 $\mu$m<br>11: plate boehmite(30% by mass) + PP(70% by mass); 8 $\mu$m<br>12: PP(dry); 8 $\mu$m |
| E | | Stacked by thermo compression bonding (interface between 13 and 15) | 13: PP(dry); 8 $\mu$m<br>14: plate boehmite<br><br>15: PP(dry); 12 $\mu$m |

Incidentally, in Table 1, the term "dry" means a porous film that is fabricated by a dry method. For example, "PP (dry)" means a polypropylene (PP) porous film fabricated by a dry method.

In addition, in Table 1, the separator A-1 is one that is formed by forming an intermediate coating layer (in Table 1, reference numeral "2") composed of 90% by mass of plate boehmite and 10% by mass of PVDF on a polypropylene (PP) porous film (in Table 1, reference numeral "1") that is fabricated by a dry method and has a thickness of 8 $\mu$m in a thickness of 4 $\mu$m by a coating method and then mechanically stacking a polypropylene (PP) porous film (in Table 1, reference numeral "3") that is fabricated by a dry method and has a thickness of 12 $\mu$m on the intermediate coating layer. For this reason, in the separator A-1, an interface is present between the intermediate coating layer (in Table 1, reference numeral "2") and the polypropylene (PP) porous film (in Table 1, reference numeral "3") having a thickness of 12 $\mu$m (in Table 1, represented as the "interface between 2 and 3"). In addition, as shown in Table 1, the side of the polypropylene (PP) porous film (in Table 1, reference numeral "1") having a thickness of 8 $\mu$m was used as the positive electrode side and the side of the polypropylene (PP) porous film (in Table 1, reference numeral "3") having a thickness of 12 $\mu$m was used as the negative electrode side in the separator A-1.

Incidentally, the separators A-2, B, and C shown in Table 1 are also ones that are formed by mechanically stacking, and thus they have an interface at the position represented in Table 1 in the same manner. However, the separator D is one that is stacked by a coextrusion method, and thus the separator D does not have an interface. In addition, the separator E is one that is stacked by heat fusion, but it is one that is formed by heat fusion of the polypropylene (PP) porous film (in Table 1, reference numeral "13") having a thickness of 8 $\mu$m with the polypropylene (PP) porous film (in Table 1, reference numeral "15") that is fabricated by a dry method and has a thickness of 12 $\mu$m via a layer composed of only plate boehmite, and thus the separator E substantially has an interface.

Examples 1 and 2 and Comparative Examples 1 to 4

[Fabrication of lithium ion secondary battery]

94% by mass was of LiNi$_{1/3}$Mn$_{1/3}$Co$_{1/3}$O$_2$ was mixed with 3% by mass of acetylene black (conductive material), and the mixture was added to and mixed with a solution prepared in advance by dissolving 3% by mass of polyvinylidene fluoride (binder) in 1-methyl-2-pyrrolidone, thereby preparing the positive electrode mixture paste. This positive electrode mixture paste was coated on one side of an aluminum foil (current collector), dried, treated under pressure, and cut into a predetermined size, thereby fabricating a belt-shaped positive electrode sheet. The density of the part except the current collector of the positive electrode was 3.6 g/cm$^3$. In addition, 95% by mass of artificial graphite ($d_{002}$ = 0.335 nm, negative electrode active material) was added to and mixed with a solution prepared in advance by dissolving 5% by mass of polyvinylidene fluoride (binder) in 1-methyl-2-pyrrolidone, thereby preparing a negative electrode mixture paste. This negative electrode mixture paste was coated on one side of a copper foil (current collector), dried, treated under pressure, and cut into a predetermined size, thereby fabricating a negative electrode sheet. The density of the part except the current collector of the negative electrode was 1. 5 g/cm$^3$. In addition, this electrode sheet was subjected to the X-ray diffraction measurement, and the result was that the ratio [I (110)/I (004)] of the peak intensity I (110) of (110) plane to the peak intensity I (004) of (004) plane of the graphite crystal was 0.1. LiPF$_6$ was dissolved in a solvent prepared by mixing EC, MEC, and DMC at 30 : 30 : 40 in a volume ratio so as to be 1.1 mol/L, thereby preparing a non-aqueous electrolytic solution. Thereafter, the positive electrode sheet, the separator represented in Table 1, and the negative electrode sheet were stacked in this order, and the non-aqueous electrolytic solution was added thereto, thereby fabricating a laminate type battery. This battery was subjected to the evaluation. The results are shown in Table 2.

[Evaluation on discharge characteristics at low temperature and cycle characteristics at high temperature]

[Evaluation on discharge characteristics at low temperature]

<Initial discharge capacity>

The laminate battery fabricated by the above method was charged for 3 hours to a termination voltage of 4.3 V at a constant current of 1 C and a constant voltage in a constant-temperature bath at 25°C. Next, the laminate battery was discharged to a cut-off voltage of 2.7 V at a constant current of 1 C, thereby determining the initial discharge capacity at 25°C.

<Discharge characteristics at low temperature>

Next, this laminate battery was charged for 3 hours to a termination voltage of 4.3 V at a constant current of 1 C and a constant voltage in a constant temperature-bath at -20°C. Next, the laminate battery was discharged to a cut-off voltage of 2.7 V at a constant current of 3 C, and the discharge capacity retention ratio at -20°C was determined by the following Equation.

Capacity retention ratio (%) = (discharge capacity at -20°C/initial discharge capacity at 25°C) x 100

[Evaluation on cycle characteristics at high temperature]

<Cycle characteristics at high temperature>

Thereafter, this laminate battery was charged for 3 hours to a termination voltage of 4.3 V at a constant current of 1 C and a constant voltage in a constant-temperature bath at 60°C and then discharged to a cut-off voltage of 2.7 V at a constant current of 1 C. This charge and discharge was to be one cycle, and this was repeated 300 cycles. Thereafter, and the capacity retention ratio after 300 cycles was determined by the following Equation.

$$\text{Capacity retention ratio (\%) = (discharge capacity after 300 cycles/discharge capacity at the first cycle)} \times 100$$

[Table 2]

**Table** 2

|  | Separator | Capacity retention ratio at -20° C (%) | Capacity retention ratio after 300 cycles at 60° C (%) |
|---|---|---|---|
| **Example 1** | A-1 | 78 | 79 |
| **Example 2** | A-2 | 78 | 81 |
| **Comparative Example 1** | B | 72 | 74 |
| **Comparative Example 2** | C | 70 | 71 |
| **Comparative Example 3** | D | 67 | 70 |
| **Comparative Example 4** | E | 69 | 72 |

Examples 3 to 15

Laminate batteries were fabricated in the same manner as in Example 1 except that a non-aqueous electrolytic solution prepared by dissolving $LiPF_6$ so as to be 1 mol/L and $LiFSO_3$ so as to be 0.1 mol/L in a solvent in which EC, VC, MEC, and DMC were mixed at 28 : 2 : 30 : 40 in a volume ratio was used and the separator was changed to those having the configurations shown in Table 3. The batteries were subjected to the evaluation. The results are shown in Table 4.

[Table 3]

**Table 3**

| Separator | Configuration of cross-section | | | | | | | | | | | | | | |
| --- | --- | --- | --- | --- | --- | --- | --- | --- | --- | --- | --- | --- | --- | --- | --- |
| | 1 | | | | | 2 | | | 3 | | | | | 4 | |
| | Porous film (I) | | | | | Intermediate layer | | | Porous film (II) | | | | | Organic layer | |
| | Facing positive electrode | | | | | | | | Facing negative electrode | | | | | | |
| | Material | Thickness ($\mu$m) | Porosity (%) | Maximum pore size ($\mu$m) | Air permeability (sec/100cc) | Material | Thickness ($\mu$m) | Porosity (%) | Material | Thickness ($\mu$m) | Porosity (%) | Maximum pore size ($\mu$m) | Gurley value (sec/100cc) | Material | Thickness ($\mu$m) |
| A-1 | PP (dry) | 8 | 47 | 0.1 | 110 | Plate boehmite fine particles (90% by mass) + PVDF (10% by mass) | 4 | 58 | PP (dry) | 12 | 48 | 0.1 | 160 | – | – |
| A-2 | PP (dry) | 8 | 47 | 0.1 | 110 | Plate boehmite fine particles (90% by mass) + PVDF (10% by mass) | 4 | 58 | PP (dry) | 12 | 48 | 0.1 | 160 | PVDF | 2 |
| A-3 | PP (dry) | 8 | 47 | 0.1 | 110 | Plate boehmite fine particles (90% by mass) + PVDF (10% by mass) | 4 | 58 | PE (dry) | 12 | 53 | 0.3 | 100 | – | – |
| A-4 | PP (dry) | 8 | 47 | 0.1 | 110 | Plate boehmite fine particles (90% by mass) + PVDF (10% by mass) | 4 | 58 | PE (wet) | 12 | 54 | 0.1 | 70 | – | – |
| A-5 | PP (dry) | 8 | 47 | 0.1 | 110 | Plate boehmite fine particles (90% by mass) + PVDF (10% by mass) | 4 | 58 | PE (wet) | 12 | 58 | 1 | 20 | – | – |
| A-6 | PP (dry) | 8 | 47 | 0.1 | 110 | Plate boehmite fine particles (90% by mass) + PVDF (10% by mass) | 4 | 58 | PP/PE/PP (dry) | 3/6/3 | 42/60/42 | 0.1/0.3/0.1 | 250 | – | – |
| A-7 | PP/PE/PP (dry) | 3/6/3 | 42/60/42 | 0.1/0.3/0.1 | 250 | Plate boehmite fine particles (90% by mass) + PVDF (10% by mass) | 4 | 58 | PP (dry) | 12 | 48 | 0.1 | 160 | – | – |
| A-8 | PE (wet) | 8 | 52 | 0.1 | 50 | Plate boehmite fine particles (90% by mass) + PVDF (10% by mass) | 4 | 58 | PP (dry) | 12 | 48 | 0.1 | 160 | – | – |
| A-9 | PE (wet) | 8 | 52 | 0.1 | 50 | Plate boehmite fine particles (90% by mass) + PVDF (10% by mass) | 4 | 58 | PE (wet) | 12 | 54 | 0.1 | 70 | – | – |
| A-10 | PP (dry) | 8 | 47 | 0.1 | 110 | Alumina fine particles (90% by mass) + PVDF (10% by mass) | 4 | 55 | PP (dry) | 12 | 48 | 0.1 | 160 | – | – |
| A-11 | PP (dry) | 8 | 47 | 0.1 | 110 | Aramid fine particles (90% by mass) + PVDF (10% by mass) | 4 | 40 | PP (dry) | 12 | 48 | 0.1 | 160 | – | – |
| A-12 | Poly-meta-phenylene isophthalamide | 8 | 45 | 0.1 | 100 | Plate boehmite fine particles (90% by mass) + PVDF (10% by mass) | 4 | 58 | PP (dry) | 12 | 48 | 0.1 | 160 | – | – |
| A-13 | PP (dry) | 8 | 47 | 0.1 | 110 | Plate boehmite fine particles (90% by mass) + PVDF (10% by mass) | 4 | 35 | PP (dry) | 12 | 48 | 0.1 | 160 | – | – |

Incidentally, in Table 3, the term "dry" means a porous film that is fabricated by a dry method. For example, "PP 'dry)" means a polypropylene (PP) porous film fabricated by a dry method. In addition, in Table 3, the term "wet" means a porous film that is fabricated by a wet method. For example, "PE (wet) " means a polyethylene (PE) porous film fabricated by a wet method.

In addition, in Table 3, the separators A-1 and A-2 are the same ones as the separators A-1 and A-2 represented in Table 1, and the separators A-3 to A-13 are ones that are obtained in the same manner as the separator A-1 except that the porous film (I), the porous film (II), and the intermediate coating layer which constitute the separator A-1 are changed to those represented in Table 3. For this reason, the separators A-3 to A-13 also have an interface at the same position as in the separator A-1.

[Table 4]

**Table 4**

|  | Separator | Capacity retention ratio at -20° C (%) | Capacity retention ratio after 300 cycles at 60° C (%) |
|---|---|---|---|
| Example 3 | A-1 | 82 | 84 |
| Example 4 | A-2 | 82 | 86 |
| Example 5 | A-3 | 88 | 87 |
| Example 6 | A-4 | 90 | 88 |
| Example 7 | A-5 | 91 | 90 |
| Example 8 | A-6 | 78 | 82 |
| Example 9 | A-7 | 81 | 82 |
| Example 10 | A-8 | 80 | 80 |
| Example 11 | A-9 | 90 | 79 |
| Example 12 | A-10 | 81 | 82 |
| Example 13 | A-11 | 80 | 80 |
| Example 14 | A-12 | 82 | 85 |
| Example 15 | A-13 | 80 | 82 |

By comparing Examples 1 and 2 with Comparative Examples 1 to 3, it has been demonstrated that the effect of the present invention is a particular effect in a lithium secondary battery comprising the separator of the present invention. In addition, the discharge characteristics at low temperatures and the cycle characteristics at high temperatures are significantly improved in all the lithium secondary batteries of Examples 3 to 15.

INDUSTRIAL APPLICABILITY

It is possible to obtain an energy storage device excellent in discharge characteristics at low temperatures and cycle characteristics at high temperatures by using the separator of the present invention. It is possible to obtain an energy storage device capable of improving discharge characteristics at low temperatures and cycle characteristics at high temperatures at the same time particularly when it is used as a separator for energy storage device such as a lithium secondary battery that is mounted in a hybrid electric vehicle, a plug-in hybrid electric vehicle, a battery electric vehicle, and the like.

**Claims**

1. A separator for an energy storage device comprising an intermediate coating layer between a porous film (I) and a porous film (II), wherein
   the porous film (I) having the intermediate coating layer on one side and the porous film (II) are mechanically stacked and laminated with each other via the intermediate coating layer.

2. The separator for an energy storage device according to claim 1, wherein the intermediate coating layer has inorganic particles and/or organic particles and a binder.

3.  The separator for an energy storage device according to claim 2, wherein the inorganic particles are an oxide or hydroxide containing one or more kinds of elements selected from Al, Si, Ti, and Zr.

4.  The separator for an energy storage device according to claim 2 or 3, wherein the organic particles are one or more kinds selected from polyamide, aramid, polyimide, polymethyl methacrylate, polystyrene, and polyethylene terephthalate.

5.  The separator for an energy storage device according to any one of claims 2 to 4, wherein the binder is one or more kinds selected from an ethylene-acrylate copolymer such as an ethylene-ethyl acrylate copolymer, polyvinyl pyrrolidone (PVP), poly(N-vinylacetamide), polyvinylidene fluoride (PVDF), a copolymer of styrene and butadiene (SBR), and carboxymethyl cellulose (CMC).

6.  The separator for an energy storage device according to any one of claims 1 to 5, wherein the porous film (I) is composed of a single-layer or multi-layer film of polyethylene or polypropylene.

7.  The separator for an energy storage device according to any one of claims 1 to 6, wherein the porous film (II) is composed of a single-layer or multi-layer film of polyethylene or polypropylene.

8.  The separator for an energy storage device according to any one of claims 1 to 7, wherein a thickness ratio of the porous film (I) to the porous film (II) is "porous film (I) : porous film (II)" = 80 : 20 to 20 : 80.

9.  The separator for an energy storage device according to any one of claims 1 to 8, wherein a porosity of the intermediate coating layer is 30 to 80%.

10. The separator for an energy storage device according to any one of claims 1 to 9, wherein one of the porous film (I) and the porous film (II) is composed of a single-layer film of polyethylene and the other is composed of a single-layer film of polypropylene.

11. The separator for an energy storage device according to claim 10, wherein the porous film (I) is composed of a single-layer film of polyethylene and the porous film (II) is composed of a single-layer film of polypropylene.

12. An energy storage device comprising the separator according to any one of claims 1 to 11.

13. The energy storage device according to claim 12, further comprising a positive electrode, a negative electrode, and a non-aqueous electrolytic solution containing a lithium salt and a non-aqueous solvent.

14. The energy storage device according to claim 12 or 13, wherein, between the porous film (I) and the porous film (II), a material of the porous film facing a positive electrode is a polypropylene and a material of the porous film facing a negative electrode is polyethylene.

15. The energy storage device according to claim 14, wherein, between the porous film (I) and the porous film (II), the porous film facing a positive electrode is a polypropylene film obtained by a dry method.

16. The energy storage device according to claim 14 or 15, wherein, between the porous film (I) and the porous film (II), the porous film facing a negative electrode is a polyethylene film obtained by a wet method.

Fig. 1

<table>
<tr><td colspan="2">国際調査報告</td><td>国際出願番号　PCT／JP2014／073629</td></tr>
</table>

A．　発明の属する分野の分類（国際特許分類（IPC））

Int.Cl.　H01M2/16(2006.01)i，H01G11/52(2013.01)i

B．　調査を行った分野

調査を行った最小限資料（国際特許分類（IPC））

Int.Cl.　H01M2/16，H01G11/52

最小限資料以外の資料で調査を行った分野に含まれるもの

日本国実用新案公報　　　　　　１９２２－１９９６年
日本国公開実用新案公報　　　　１９７１－２０１４年
日本国実用新案登録公報　　　　１９９６－２０１４年
日本国登録実用新案公報　　　　１９９４－２０１４年

国際調査で使用した電子データベース（データベースの名称、調査に使用した用語）

C．　関連すると認められる文献

| 引用文献の<br>カテゴリー＊ | 引用文献名　及び一部の箇所が関連するときは、その関連する箇所の表示 | 関連する<br>請求項の番号 |
|---|---|---|
| X<br>Y | WO 2011/013300 A1 （パナソニック株式会社）2011.02.03，請求の範囲、[0020] - [0025]、[0040]、[0081]、[0084] - [0088]、[0091]、[0103]、[図3]　& US 2011/0171509 A1 & CN 102197511 A<br>& KR 10-2011-0054012 A | 1, 6-14<br>2-5, 15, 16 |
| Y<br>A | WO 2013/129009 A1 （日産自動車株式会社）2013.09.06，[0061] - [0064]　& JP 2013-178952 A | 2-5<br>1, 6-16 |

☑　C欄の続きにも文献が列挙されている。　　　　　　　　　☐　パテントファミリーに関する別紙を参照。

＊　引用文献のカテゴリー
「A」特に関連のある文献ではなく、一般的技術水準を示す
　　もの
「E」国際出願日前の出願または特許であるが、国際出願日
　　以後に公表されたもの
「L」優先権主張に疑義を提起する文献又は他の文献の発行
　　日若しくは他の特別な理由を確立するために引用す
　　る文献（理由を付す）
「O」口頭による開示、使用、展示等に言及する文献
「P」国際出願日前で、かつ優先権の主張の基礎となる出願

の日の後に公表された文献
「T」国際出願日又は優先日後に公表された文献であって
　　出願と矛盾するものではなく、発明の原理又は理論
　　の理解のために引用するもの
「X」特に関連のある文献であって、当該文献のみで発明
　　の新規性又は進歩性がないと考えられるもの
「Y」特に関連のある文献であって、当該文献と他の1以
　　上の文献との、当業者にとって自明である組合せに
　　よって進歩性がないと考えられるもの
「＆」同一パテントファミリー文献

| 国際調査を完了した日<br>　　　　　０６．１０．２０１４ | 国際調査報告の発送日<br>　　　　　１４．１０．２０１４ | | |
|---|---|---|---|
| 国際調査機関の名称及びあて先<br>　日本国特許庁（ISA／JP）<br>　　郵便番号１００－８９１５<br>　　東京都千代田区霞が関三丁目４番３号 | 特許庁審査官（権限のある職員）<br><br>　　山内　達人<br><br>電話番号　０３－３５８１－１１０１　内線　３４７７ | 4X | 3348 |

様式PCT／ISA／２１０（第２ページ）（２００９年７月）

国際調査報告        国際出願番号 ＰＣＴ／ＪＰ２０１４／０７３６２９

C（続き）． 関連すると認められる文献

| 引用文献の<br>カテゴリー＊ | 引用文献名 及び一部の箇所が関連するときは、その関連する箇所の表示 | 関連する<br>請求項の番号 |
|---|---|---|
| Y<br>A | JP 2013-105578 A (宇部興産株式会社) 2013.05.30, 【0046】、【0047】<br>(ファミリーなし) | 2-5<br>1, 6-16 |
| Y<br>A | リチウムイオン二次電池第二版－材料と応用－，２版，日刊工業新<br>聞社，2000.01.27, pp. 109-110 | 15, 16<br>1-14 |
| Y<br>A | JP 2011-154936 A (日立マクセル株式会社) 2011.08.11, 【0002】-<br>【0004】 (ファミリーなし) | 15, 16<br>1-14 |
| A | JP 2013-145693 A (トヨタ自動車株式会社) 2013.07.25, 【請求項1】、<br>【請求項2】、【0078】-【0085】、【図4】 (ファミリーなし) | 1-16 |
| A | JP 2012-22911 A (東レ株式会社) 2012.02.02, 全文 (ファミリーな<br>し) | 1-16 |
| A | WO 2010/106984 A1 (日立マクセル株式会社) 2010.09.23, 全文<br>& JP 5421358 B & US 2011/0318631 A1 & CN 102341947 A<br>& KR 10-2011-0131198 A | 1-16 |
| A | JP 2011-198632 A (ニッポン高度紙工業株式会社) 2011.10.06, 全<br>文 & US 2011/0229752 A1 & US 2014/0042661 A1 & CN 101950799 A | 1-16 |
| A | JP 2008-234851 A (松下電器産業株式会社) 2008.10.02, 全文 (フ<br>ァミリーなし) | 1-16 |
| A | JP 2013-73961 A (ダイハツ工業株式会社) 2013.04.22, 全文 (ファ<br>ミリーなし) | 1-16 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008123861 A
- JP 2012014884 A
- JP 2012022911 A
- JP 2013145693 A